(19) **Europäisches Patentamt / European Patent Office / Office européen des brevets**

(11) **EP 4 533 956 A1**

(12) **EUROPEAN PATENT APPLICATION**

(43) Date of publication:
**09.04.2025 Bulletin 2025/15**

(21) Application number: **23201446.4**

(22) Date of filing: **03.10.2023**

(51) International Patent Classification (IPC):
**A23F 3/06** (2006.01)  **A23F 3/14** (2006.01)
**A23F 3/34** (2006.01)  **A23L 33/105** (2016.01)

(52) Cooperative Patent Classification (CPC):
**A23F 3/06; A23F 3/14; A23F 3/34; A23L 2/39; A23L 33/105**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ekaterra Research and Development UK Limited**
**Sharnbrook, Bedfordshire MK44 1LQ (GB)**

(72) Inventor: **The designation of the inventor has not yet been filed**

(74) Representative: **Mewburn Ellis LLP**
**Aurora Building**
**Counterslip**
**Bristol BS1 6BX (GB)**

(54) **A PROCESS FOR PRODUCING A BOTANICAL PRODUCT**

(57)    The present invention relates to a process for producing a botanical product, such as a green tea or herbal product. More particularly the present invention relates to a process for producing an ambient or cold water infusible botanical product (e.g. green tea product) with excellent infusion properties at ambient or cold temperature.

Processed by Luminess, 75001 PARIS (FR)

## Description

### Field of the invention

The present invention relates to a process for producing a botanical product, such as a green tea or herbal tea product. More particularly the present invention relates to a process for producing a botanical product (e.g. green tea product) with excellent infusion properties, particularly at ambient temperature.

### Background:

There has been an increase in the consumption of cold brew beverages (e.g. cold brew teas and coffees) in recent years for hydration, health and wellbeing benefits.

This increased consumption has resulted in a drive from consumers for a greater number and more diverse range of beverage products (such as teas, coffees and herbal beverages) which are able to deliver excellent infusions using cold and ambient temperature water.

Typically, many tea products (particularly green tea) and herbal products do not infuse well in ambient / cold water. Thus, presently, there are few natural cold brew green tea products available in the market, and a limited number of cold brew herbal beverage products that are commercially available.

Of the cold brew green tea products that are available in the market these largely consist of green tea products which are coated with instant green tea solids or include added Matcha tea.

Tea and herbal beverages are also relatively cheap products with often low profit margins. For this reason, any processing of such beverage products to produce cold water infusible beverages needs to be both cheap and easily implementable.

Thus, there remains a need for new beverage products (such as such as green tea and herbal beverages) which are able to deliver excellent infusions using cold and ambient temperature water, and for methods for their production.

The present invention was devised with the foregoing in mind.

### Summary of the invention

The present invention provides a process for preparing botanical materials (e.g. tea leaf products) with excellent infusion liquors, and in particular infusions which deliver an excellent quantity of soluble solids (e.g. catechins, polyphenols and the like) to the end cup.

Thus, according to a first aspect of the invention there is provided a process for producing a botanical product comprising the steps of:

a) providing a botanical material with a moisture content of less than 20% by weight;
b) contacting the botanical material with water to achieve a moisture content of between 30% and 100% by weight;
c) incubating the botanical material of step b) for at least 20 minutes; and
d) drying the botanical material to a moisture content of less than 10% by weight.

In a second aspect there is provided a botanical product (e.g. a tea leaf product) prepared according to the process of the invention.

These and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples *per se.* Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The disclosure of the invention as found herein will be understood to cover all embodiments as found in the claims and as discussed hereinbelow.

Where a feature is disclosed with respect to a particular aspect of the invention (for example in relation to one specific process of the invention), such disclosure is also to be considered to apply to any other aspect of the invention (for example in relation to any other process of the invention) *mutatis mutandis.*

The present invention provides a process for producing a botanical product comprising the steps of:

a) providing a botanical material with a moisture content of less than 20% by weight;
b) contacting the botanical material with water to achieve a moisture content of between 30% and 100% by weight;
c) incubating the botanical material of step b) for at least 20 minutes; and
d) drying the botanical material to a moisture content of less than 10% by weight.

*Botanical Material*

For the purpose of the present invention, the botanical material may be any material produced from a plant material which is fit for human consumption. The botanical material may preferably comprise the leaves of the plant, roots of the plants, flowers of the plant, fruits of the plants or any other parts of the plants. Preferably, the botanical material refers to the leaves of the plant. It will be appreciated that the term botanical material also encompasses the leaves, stems, roots, flowers, and fruits of shrubs.

In certain preferred embodiments, the botanical material is a leaf tea material.

The leaf tea material may preferably be selected from green tea, black tea oolong tea, white tea or blends thereof. Preferably, the leaf tea material is a green tea leaf material.

A leaf tea material preferably means a tea leaf material which is obtained after the tea manufacturing processes and comprise less than 10%, preferably less than 7% and most preferably less than 5% moisture by weight of the leaf tea product.

Green tea refers to substantially unfermented tea. Green tea has different characteristics than black tea. Green tea liquor is light in colour unlike black tea. Green tea is also enriched with catechins and has low or no amount of theaflavins.

Black tea generally refers to fermented tea and produced by processing fresh tea leaves. Fresh tea leaf refers to tea leaf, buds and/or stem that have never been dried to a water content of less than 30% by weight, and usually have moisture content in the range 60 to 90%. Black tea has different characteristics to green tea. Black tea is more astringent in taste and less bitter than green tea. The redness of black tea liquor is also significantly higher than that of green tea. Black tea also contains higher level of theaflavins.

In the process of black tea, fermentation refers to the oxidative and hydrolytic process that tea undergoes when certain endogenous enzymes and substrates are brought together, e.g. by mechanical disruption of the cells by maceration of the leaves. During this process, colourless catechins in the leaves are converted to a complex mixture of yellow and orange to dark-brown polyphenolic substances.

Oolong tea refers to semi-fermented tea.

The preferred leaf tea product for the purpose of the present invention is green tea.

In certain preferred embodiments the botanical material is a green tea material with a moisture content of less than 20% by weight.

It will be appreciated that the green tea material may be made directly from fresh tea leaves from a tea plant or may be purchased as a finished green tea material.

In certain embodiments, the green tea material (green tea leaves) has a total polyphenols content of between 10% and 40%, such as between 15% and 35%, or between 15 and 25%, or between 18 and 22%, based on the weight of the green tea material.

In some embodiments, the green tea material (green tea leaves) has a total catechin content of between 5% and 30%, such as between 2% and 25%, or between 5 and 15%, or between 7 and 10%, based on the weight of the green tea material.

When the tea leaves (e.g. green tea leaves) are fresh tea leaves, they typically have a moisture content of greater than 40%, and more typically greater than 50%, even more typically greater than 60%, further typically greater than 65%, and still more typically greater than 70%.

In certain embodiments, the botanical material is a herbal material or a spice.

It will be appreciated that herbal materials and spices may comprise any leaves, stems, roots, flowers, and fruits of a plant that may be used for flavouring, food, medicine, or perfume. In certain embodiments, the herbal materials may comprise any leaves, stems, bark, roots, flowers, and fruits of a plant that has beneficial properties associated with human health (e.g. medicinal properties).

In certain embodiments, the herbal material is selected from rooibos, hibiscus, chamomile, rosehip, mint, lemon verbena product, chicory, an orange, yerba mate, ginger, turmeric, valerian, ashwagandha, echinacea flower, lavender flower, fennel seeds, elderberry, passion flower and combinations thereof.

In certain embodiments, the herbal material is selected from rooibos, hibiscus, chamomile, rosehip, mint, lemon verbena product, chicory, an orange, yerba mate, ginger, turmeric, valerian, ashwagandha and combinations thereof.

In some embodiments, the herbal material is selected from rooibos, hibiscus, chamomile, rosehip, mint, lemon verbena product, chicory, an orange, yerba mate and combinations thereof.

In some embodiments, the herbal material is selected from ginger, turmeric, valerian, ashwagandha and combinations thereof.

The botanical material (e.g. green tea leaves) may have any suitable average (e.g. mean) particle size, such as between 5 μm and 3000 μm, or between 50 μm and 3000 μm, or between 100 μm and 2000 μm, or between 500 μm and 2000 μm

In some embodiments, the botanical material (e.g. green tea leaves) may be between 5 μm and 100 μm, or between 5 μm and 50 μm, or between 5 μm and 30 μm, or between 5 μm and 20 μm.

*Preparing the green tea material*

In certain preferred embodiments the botanical material is a green tea material with a moisture content of less than 20% by weight.

It will be appreciated that the green tea material may be made directly from fresh tea leaves from a tea plant or may be purchased as a finished green tea material.

When the tea leaves are fresh tea leaves, they typically have a moisture content of greater than 40%, and more typically greater than 50%, even more typically greater than 60%, further typically greater than 65%, and still more typically greater than 70%.

The fresh tea leaf may be obtained from *Camellia sinensis var. sinensis* and/or *Camellia sinensis var. assamica.*

Thus, in certain embodiments, the green tea material with a moisture content of less than 20% by weight may be prepared according to the following process:

    i. providing fresh tea leaves with moisture content of at least 50% by weight;
    ii. contacting the tea leaves with steam or pan frying the tea leaves;
    iii. optionally, subjecting the tea leaves to a step of comminution; and
    iv. drying the tea leaves to obtain the tea product.

In step ii), the fresh tea leaves are contacted with steam and/or are pan fried. These are well known steps in the art for deactivating enzymes that exist in the fresh tea leaves. Preferably, in step ii), the fresh tea leaves are contacted with steam. More preferably, in step ii), the fresh tea leaves are contacted with steam at a temperature of between 95 °C and 140 °C (e.g. between 100 °C and 130 °C) for between 20 seconds to 30 minutes.

In some embodiments, step ii) comprises pan frying the tea leaves a temperature of between 80 °C and 200 °C (e.g. between 80 °C and 150 °C) for between 15 seconds to 30 minutes.

In a preferred embodiment, step iii) is present.

In step iii), the fresh tea leaves are subjected to comminution. This step of size reduction is preferably carried out by crushing, tearing and curling (known in the art of tea processing as CTC). It may also be carried using other well-known methods for size reduction, such as Rotorvane, Spheronization and the like. It will be appreciated that one or more CTC steps may be carried out. In this step the leaf breaks up and releases enzymes that exist in the leaf. The comminuted tea leaves also known as dhool.

In some embodiments, step iii) may comprise a step of subjecting the fresh tea leaves to centrifugation to help comminute and grade the fresh tea leaves.

In embodiments where step iii) is absent, the process may comprise a step of creating micropores having diameter in the range of 5 to 100 μm on the fresh tea leaves.

Preferably the micropores have a diameter ranging from 5 to 90 μm, more preferably 20 to 80 μm and most preferably 30 to 70 μm.

The micropores can preferably be created by using a technique selected from the group consisting of lasers, sand blasting, dry ice blasting, micropins, electroporation, and combinations of one or more thereof.

Preferably, the micropores are created using micropins.

The number of micropores is preferably in the range of 200 to 400 per cm$^2$ of tea leaf, more preferably 250 to 400 cm$^2$ of tea leaf per and most preferably 300 to 400 per cm$^2$ of tea leaf.

In some embodiments, there is an additional step of withering of fresh tea leaves before comminution to reduce the moisture content of the fresh tea leaves to less than 65% by weight.

Step iv) involves drying the fresh tea leaves to obtain the green tea material. During the drying step, the fresh tea leaves are preferably dried to a moisture content of less than 10% by total mass of the tea leaf, more preferably less than 5 % by total mass of the tea leaf, to obtain the leaf tea product. The drying preferably be performed at a temperature in the range of 80 to 160°C, more preferably 90 to 150°C, most preferably 100 to 130°C.

The drying step is preferably carried out by thermal drying, freeze drying, vacuum drying or using a fluidized bed dryer.

Preferably, the drying step is carried out using a fluidized bed dryer.

*Step b)*

In step b) of the process of the invention, the botanical material (e.g. green tea leaves) is contacted with water to achieve a moisture content of between 30% and 100% by weight.

Preferably, the botanical material (e.g. green tea leaves) is contacted with water to achieve a moisture content of between 40% and 100% by weight, more preferably between 55% and 95% by weight, still more preferably between 60% and 90% by weight, even more preferably between 70% and 90% by weight, and most preferably between 70% and 85% by weight.

It will be appreciated that the water content mentioned above refers to the moisture content of the botanical material (e.g. green tea leaves).

It will be appreciated that the water of step b) may be at any suitable temperature. In some embodiments, the botanical material (e.g. green tea leaves) is contacted with water at a temperature of between 5 °C and 90 °C.

Preferably, the botanical material is contacted with water at a temperature of between 5 °C and 80 °C. More preferably, the botanical material is contacted with water at a temperature of between 5 °C and 70 °C. Still more preferably, the botanical material is contacted with water at a temperature of between 5 °C and 50 °C. Even more preferably, the botanical material is contacted with water at a temperature of between 10 °C and 40 °C. Yet more preferably, the botanical material is contacted with water at a temperature of between 15 °C and 35 °C. Most preferably, the botanical material is contacted with water at a temperature of between 18 °C and 30 °C (e.g. 22 °C to 26 °C).

The water added in step b) may have any suitable pH. In certain embodiments, the water added in step b) has a pH of between 5.5 and 8.5. Preferably, the water added in step b) has a pH of between 5.5 and 7.5. More preferably, the water added in step b) has a pH of between 5.8 and 7.2. Most preferably, the water added in step b) has a pH of between 6.0 and 6.6.

It will be appreciated that one or more additives may be added to the water used in step b). A non-limiting list of possible additives include vitamins, nutrients, flavourings (including sugar and sweeteners), metals and minerals, bulking agents, binders, anti-caking agents (e.g. silicon dioxide), pH modifiers, buffering agents, cell wall hydrolysing enzymes (e.g. pectinase, lipase, cellulase, hemicellulose, endo glucanase, cellobiase, amylase, beta glycosidase) and combinations thereof.

In certain embodiments, the one or more additives may be added to the botanical material (e.g. green tea leaves) before or after step b). In such instances, the skilled person will be able to determine suitable administration routes based on known methodology.

A non-limiting list of possible vitamins include vitamin C, vitamin D (e.g. vitamin D2 and vitamin D3), B vitamins (such as vitamin B6, vitamin B12, vitamin B2, vitamin B3, vitamin B9, vitamin B7 (Biotin) etc.) vitamin E, vitamin A, vitamin B1, vitamin K and folate.

A non-limiting list of possible flavourings include vanilla, fruit (e.g. strawberry, lemon, berry), ginger, cardamom, all spices, jasmine and tea essence (e.g. earl grey, black tea).

A non-limiting list of possible nutrients include metal and minerals (e.g. zinc, iron, calcium, sodium, magnesium) and essential fatty-acids (e.g. omega-3 and omega-6). Preferably, the one or more additional nutrients is selected from metals and minerals (e.g. zinc, iron, calcium, sodium), and most preferably iron and/or zinc.

A non-limiting list of possible bulking agents include starch, carboxymethyl cellulose and sugar (e.g. dextrose).

A non-limiting list of possible bulking agents include gum arabic, maltodextrin, modified starch (e.g. OSA starch) and xanthan gum.

A non-limiting list of possible pH modifiers include bases such as sodium carbonate, sodium bicarbonate, potassium carbonate, potassium bicarbonate and mixtures thereof.

A non-limiting list of suitable buffering agents include citrates, carbonates, bicarbonates, phosphates, borates, glycine and combinations thereof. In certain embodiments, the buffering agent is a basic form of the acid included in the composition of the invention. For example, when the acid is citric acid, the buffering agent may be a citrate (e.g. sodium or potassium citrate).

It will be appreciated that the above additional agents may be added in any suitable amount. Preferably, the one or more additional agents are each independently added in an amount of between 0.01 and 5 % by weight of the botanical material (e.g. green tea leaves), preferably between 0.05 and 4 % by weight of the botanical material (e.g. green tea leaves), more preferably between 0.1 and 3 % by weight of the botanical material (e.g. green tea leaves), and most preferably between 0.5 and 2 % by weight of the botanical material (e.g. green tea leaves).

The process of contacting botanical material (e.g. green tea leaves) with water includes but is not limited to, spraying, dipping, pouring, submerging etc. In certain embodiments, the botanical material (e.g. green tea leaves) are contacted with water by spraying. In other embodiments, the botanical material (e.g. green tea leaves) are contacted with water by pouring the water onto the botanical material (e.g. green tea leaves).

Preferably, the contacting time is in the range from 1 minute to 2 hours, more preferably from 2 minutes to 1 hour and most preferably from 2 minutes to 30 minutes.

*Step c)*

In step c) of the process of the invention, the botanical material of step b) is incubated for at least 20 minutes.

In certain preferred embodiments, the botanical material of step b) is incubated for at least 30 minutes, and preferably at least 40 minutes, and more preferably at least 50 minutes, and most preferably at least 60 minutes.

Thus, in some preferred embodiments, the botanical material of step b) is incubated for between 20 minutes and 5 hours, and preferably between 30 minutes and 4 hours, and more preferably between 40 minutes and 4 hours, and most preferably between 1 hour and 3 hours.

It will be appreciated that the step of incubating the botanical material of step b) may be conducted at any suitable temperature. In certain embodiments, the botanical material of step b) is incubated at a temperature of between 10 °C and 70 °C, and preferably at a temperature of between 15 °C and 60 °C, and more preferably at a temperature of between 20 °C and 50 °C, and still more preferably at a temperature of between 20 °C and 40 °C, and most preferably at a temperature of between 15 °C and 35 °C (e.g. 22 °C to 26 °C).

It will be appreciated that the step of incubating the botanical material may be conducted at any suitable pressure. Preferably, the step of incubating the botanical material is conducted at ambient pressure (1 atmosphere).

It will also be appreciated that after the step of incubating the botanical material (e.g. green tea leaves) but before the step of drying the botanical material (e.g. green tea leaves) one or more optional further steps may be included in the process of the invention.

A non-limiting list of possible further steps include contacting the botanical material (e.g. green tea leaves) with steam, pan frying the botanical material (e.g. green tea leaves), subjecting the botanical material (e.g. green tea leaves) to comminution, subjecting the botanical material to a step of mechanical shear, contacting the botanical material with one or more enzymes and/or pH modifiers, coating the one or more metals, minerals or vitamins, coating of botanical material with another botanical material of the same or different origin, and combinations thereof.

In certain embodiments, the process of the invention further includes a step of subjecting the botanical material (e.g. green tea leaves) to comminution, preferably after step c) but before step d). This step of size reduction is preferably carried out by crushing, tearing and curling (known in the art of tea processing as CTC). It may also be carried using other well-known methods for size reduction, such as Rotorvane, spheronization and the like. It will be appreciated that one or more CTC steps may be carried out. In this step the leaf breaks up and releases enzymes that exist in the leaf. The comminuted tea leaves also known as dhool.

After comminution, the botanical material (e.g. green tea leaves) may have any suitable average (e.g. mean) particle size, such as between 5 $\mu$m and 3000 $\mu$m, or between 50 $\mu$m and 3000 $\mu$m, or between 100 $\mu$m and 2000 $\mu$m, or between 500 $\mu$m and 2000 $\mu$m. In some embodiments, the botanical material (e.g. green tea leaves) may have an average (e.g. mean) particle size of between 5 $\mu$m and 100 $\mu$m, or between 5 $\mu$m and 50 $\mu$m, or between 5 $\mu$m and 30 $\mu$m, or between 5 $\mu$m and 20 $\mu$m.

In certain embodiments, the process of the invention further includes a step of contacting the botanical material (e.g. green tea leaves) to steam, preferably after step c) but before step d).

Preferably, the botanical material (e.g. green tea leaves) is contacted with steam at a temperature of between 95 °C and 140 °C for between 1 minute and 30 minutes, more preferably at a temperature of between 100°C and 140 °C for between 1 minute and 15 minutes, and most preferably at a temperature of between 105 °C and 135 °C for between 1 minute and 5 minutes.

In some embodiments, after step c) and before step d) the botanical material is further subjected to a step of mechanical shear. It will be appreciated that mechanical shear refers to the action of mechanical strain or stress being applied to the botanical material.

The term 'shear' generally means the act of producing some strain in the structure of a substance/material. Shear as mentioned herein preferably means damaging the botanical material (e.g. green tea leaves) in a controlled way.

In the present invention, as mentioned above, the shear is produced by passing the botanical material (e.g. green tea leaves) through an instrument. This preferably done by using a mechanical device. Non-limiting examples of suitable mechanical devices are screw press, screw plates, plough shear mixer, screw tubes and the like.

The botanical material (e.g. green tea leaves) is preferably exposed to shear, preferably for between 30 seconds and 5 minutes and more preferably between 30 seconds and 3 minutes.

The shear rate for the above step is preferably in the range of 10000 /s to 15000 /s.

The shear is the rate at which a material deforms at a given speed in a channel having a defined depth and diameter. For the purpose of the invention, where the botanical material (e.g. green tea leaves) is subjected to shear in a device with a shaft diameter D cm and with a channel depth of H cm of at N rpm, then the shear rate is:

$$\text{Shear Rate} = \frac{\pi * D * N}{H}$$

For this kind of equipment, there is a rotating shaft inside a channel through which the material is to be passed. The rotational motion of this shaft conveys the material from one end (inlet) of the instrument to the other end (outlet). During this conveyance, the material experiences shear against the wall of the channel and the shaft. When the shaft is preferably having screw like extensions, it is known as screw press. In the above equation 'D' is the diameter of the shaft and 'H' is the channel depth. Channel depth means the longitudinal distance from the shaft to the wall of the channel. Therefore, 'H+D' can be considered as the channel diameter.

For a screw press wherein the diameter is 12.7 cm with a channel depth of 0.1 cm and at 25 rpm, the shear rate as calculated using the above equation is approximately 10000 Is.

Preferably, pressure applied for the process is in the range of 0 to 10 bars, more preferably 0 to 5 bars, still more preferably 0 to 2 bar and most preferably 0 to 0.5 bar.

Preferably, the filling percentage of the botanical material (e.g. green tea leaves) in said instrument is also considered as a controlling parameter to obtain higher benefit of polyphenol delivery at the end cup. The words "filling percentage" preferably means the percentage of the instrument's available volume (i.e. capacity) that is filled by the dhool. Preferably the filling percentage of the botanical material (e.g. green tea leaves) in said instrument is in the range of 35% to 80%, more preferably 40% to 80%, furthermore preferably 50% to 80% and most preferably from 60% to 80%.

In certain embodiments, the after step c) and before step d) the botanical material is subjected to a step of mechanical shear using a screw press (e.g. a Vincent CP4 screw press) and applying a pressure of between 0 bar to 0.5 bar (e.g. 0 bar) and using a rotational speed of between 15 Hz and 40 Hz (e.g. 25 Hz).

It will be appreciated that in certain embodiments, the process of the invention may further comprise a step of contacting the botanical material with one or more enzymes and/or pH modifiers (e.g. after step c) and before step d)). The possible enzymes / pH modifiers that may be used will be apparent to those in the art. Non-limited examples of possible enzymes that may be used include tannase, pectinase, cellulase, hemicellulose, amylase, beta glycosidase, endo gluconase, cellobiase, and combinations thereof. Non-limiting examples of possible pH modifiers include those outlined above.

The present invention also provides botanical products prepared using the process of the present invention.

The present invention will now be demonstrated by way of non-limiting examples below. The examples are for illustration only and do not limit the scope of the invention in any manner.

**Examples:**

_Materials & Experiments:_

Green leaves with total polyphenols content varying from 18.5 - 20.4% and catechins content varying from 9.2 - 9.5% were used to produce two different types of green teas.

_Example 1_

Fresh tea leaves were harvested from a Kenyan tea garden. The moisture content of the tea product was around 78%. The fresh tea leaves were then steamed at a temperature of 130 °C for about 1 minute. After the tea leaves were subjected to Rotorvane to obtain a macerated dhool. The resulting dhool was then dried using fluidised bed drier at 120 °C for about 20 minutes or until the moisture content of the macerated leaves was to 2-3% moisture.

_Example 2_

The tea leaf product of Example 1 (100 g) was hydrated with 240 mL of deionized water to achieve a moisture content of 73% and incubated at room temperature (25 °C) for 1 hour, before being dried to a moisture content of 2-3% in fluidized bed dryer at 120 °C for about 20 minutes.

_Example 3_

Fresh tea leaves were harvested from a Kenyan tea garden. The moisture content of the tea product was around 78%. The fresh tea leaves were then steamed at a temperature of 130 °C for about 1 minute. After the tea leaves were subjected to CTC (cut tear curl) for 4 times to obtain macerated dhool. The resulting dhool was then dried using fluidised bed drier at 120 °C for about 20 minutes or until the moisture content of the macerated leaves was to 2-3% moisture.

*Example 4*

The tea leaf product of Example 3 (100 g) was hydrated with 240 mL of deionized water to achieve a moisture content of 73% and incubated at room temperature (25 °C) for 1 hour, before being dried to a moisture content of 2-3% in fluidized bed dryer at 120 °C for about 20 minutes.

**Measurements:**

Brewing method:

*Cold Brew*: 2 g of the tea products outlined herein were packed in double chamber teabags and dunked 20 times (approximately 1 dunk/sec) in 200 mL of deionised water at a temperature of approximately 24 °C. Post brewing, the teabags was taken out and the infusion was used to measure the colour and the amount of polyphenols and catechins delivered to the end cup.

*Hot Brew*: 2 g of the tea products outlined herein were packed in double chamber teabags and dunked 10 times (approximately 1 dunk/sec) in 200 mL of deionised water at a temperature of 95 °C. Post brewing, the teabags were taken out and infusion was used for catechins measurement.

Colour Measurements:

Colour (CIE L*a*b* values) was measured using a Hunter lab Ultrascan Vis(Serial No: UV VIS 1437,Hunterlab Associates Laboratories Inc. Virginia). A halogen cycle lamp was used as the light source. The illuminant used was D65 and the measurements were made at 10°- Observer angle. Measurements were made in reflectance mode TITRAN mode using a 1cm quartz cuvette of 10 mm path length. Tea infusions as prepared above were filled up to the brim in the cuvette and placed in the instrument for colour measurement. The instrument was calibrated using a standard white tile (Hunterlab Duffuse/10°, mode-Total Transmittance, Port-1" and area- large) in accordance with the instructions provided in the instruction manual. The L*a*b* values were measured at room temperature (25°C).

The maximum value for L* is 100, which represents a perfect reflecting diffuser. The minimum is L*=0, which represents black. The a* and b* axes have no specific numerical limits. Positive a* is red and negative a* is green. Similarly, positive b* is yellow and negative b* is blue.

The higher the a* value the redder is the infusion. In the same way the higher the b* value the brighter is the infusion.

| Injection Volume | 20.0 μL | |
|---|---|---|
| Flow Rate | 1.0 mL/min | |
| Run time | 45.0 min | |
| Column Temperature | 24 Deg C | |
| Column Details | Phenomenex Luna 5 μm Phenyl-Hexyl 100 Å LC column 250 x 4.6mm | |
| Quat. Pump (Time-min) | Mobile phase A (%) | Mobile phase B (%) |
| 0 | 100 | 0 |
| 10 | 100 | 0 |
| 25 | 68 | 32 |
| 35 | 68 | 32 |
| 35.01 | 100 | 0 |
| 45 | 100 | 0 |

(continued)

| Injection Volume | 20.0 μL | |
|---|---|---|
| Flow Rate | 1.0 mL/min | |
| Run time | 45.0 min | |
| Column Temperature | 24 Deg C | |
| Column Details | Phenomenex Luna 5 μm Phenyl-Hexyl 100 Å LC column 250 x 4.6mm | |
| Quat. Pump (Time-min) | Mobile phase A (%) | Mobile phase B (%) |
| 0 | 100 | 0 |
| 10 | 100 | 0 |
| 25 | 68 | 32 |
| 35 | 68 | 32 |
| 35.01 | 100 | 0 |
| 45 | 100 | 0 |

Catechins Measurements:

Catechins were measured in the infusion by using the following ISO method (14502-2) using Agilent UPLC model No :1260 infinity II.

Delivered Polyphenols Measurement:

Polyphenol content were measured using the standard ISO 14502-1:2005(E) procedure, the contents of which is incorporated herein by reference.

Measurement of Hydration of tea particles:

2 g of of the tea products outlined herein were packed in a double chambered teabags (cotton) with a string. The teabags were dropped into 200 mL of deionised water at 23 °C and left for 20 seconds untouched. Post 20 seconds, the teabags were dipped 20 times at constant speed (1 dip/sec) and the teabags were then removed. Water uptake was measured using the following formula.

$$\text{Water uptake} = (X-Y)/(Y-Z) *100$$

X- Weight of teabag (with tea) before hydration test
Y- Weight of teabag (with tea) after hydration test
Z- Weight of empty tea bag

**Table 1**: Total Catechins Content (mg/cup) of Cold brew green tea

| Details | Catechins per cup | Difference in catechins between Example 1 & 2 | Difference in catechins between Example 1 & 3 | Difference in catechins between Example 1& 4 |
|---|---|---|---|---|
| Example 1 | 15.3 | | | |
| Example 2 | 19.5 | 4.2 | | |
| Example 3 | 16.9 | | 1.6 | |
| Example 4 | 25.9 | | | **10.3** |

**Table 2**: Delivered Polyphenols content (mg/cup) of Cold brew green tea

| Details | Total polyphenols per cup | Difference in polyphenols between Example 1 & 2 | Difference in polyphenols between Example 1 & 3 | Difference in polyphenols between Example 1& 4 |
|---|---|---|---|---|
| Example 1 | 53.0 | | | |
| Example 2 | 64.9 | 11.9 | | |
| Example 3 | 59.1 | | 6.1 | |
| Example 4 | 92.8 | | | **39.8** |

**Table 3**: Infusion colour (b*brightness) of Cold brew green tea

| Details | b* | Difference in b* value between Example 1 & 2 | Difference in b* value between Example 1 & 3 | Difference in b* value between Example 1& 4 |
|---|---|---|---|---|
| Example 1 | 13.0 | | | |
| Example 2 | 18.0 | 5.0 | | |
| Example 3 | 14.0 | | 1.0 | |
| Example 4 | 21.0 | | | **8.0** |

## Table 4: Hydration measurement of green tea (water uptake)

| Details | Water uptake (% Moisture content post hydration) | Difference in Moisture between Example 1 & 2 | Difference in Moisture between Example 1 & 3 | Difference in Moisture between Example 1& 4 |
|---|---|---|---|---|
| Example 1 | 79.4 | | | |
| Example 2 | 81.7 | 2.4 | | |
| Example 3 | 80.4 | | 0.99 | |
| Example 4 | 83.3 | | | **4.0** |

From the above tables it is evident that green tea products obtained using the process of the present invention (Example 4) provide brighter coloured infusions with significantly higher amounts of polyphenols and catechins compared to tea products prepared using other preparation routes.

Effect of moisture content

*Example 5*

The tea leaf product of Example 3 (100 g) was hydrated with 60 mL of deionized water to achieve a moisture content of 43% and incubated at room temperature (25 °C) for 1 hour, before being dried to a moisture content of 2-3% in fluidized bed dryer at 120 °C for about 20 minutes.

*Example 6*

The tea leaf product of Example 3 (100 g) was hydrated with 100 mL of deionized water to achieve a moisture content of 53% and incubated at room temperature (25 °C) for 1 hour, before being dried to a moisture content of 2-3% in fluidized bed dryer at 120 °C for about 20 minutes.

*Example 7*

The tea leaf product of Example 3 (100 g) was hydrated with 150 mL of deionized water to achieve a moisture content of 63% and incubated at room temperature (25 °C) for 1 hour, before being dried to a moisture content of 2-3% in fluidized bed dryer at 120 °C for about 20 minutes.

*Example 8*

The tea leaf product of Example 3 (100 g) was hydrated with 240 mL of deionized water to achieve a moisture content of 73% and incubated at room temperature (25 °C) for 1 hour, before being dried to a moisture content of 2-3% in fluidized bed dryer at 120 °C for about 20 minutes.

*Example 9*

The tea leaf product of Example 3 (100 g) was hydrated with 300 mL of deionized water to achieve a moisture content of 76% and incubated at room temperature (25 °C) for 1 hour, before being dried to a moisture content of 2-3% in fluidized bed dryer at 120 °C for about 20 minutes.

*Example 10*

The tea leaf product of Example 3 (100 g) was hydrated with 400 mL of deionized water to achieve a moisture content of 81% and incubated at room temperature (25 °C) for 1 hour, before being dried to a moisture content of 2-3% in fluidized bed dryer at 120 °C for about 20 minutes.

Cold brew infusions of the tea products of Examples 3 and 5 to 10 were then prepared according to Cold Brew procedure outlined above.

**Table 5**: Effect of added moisture content on Infusion colour (L*a*b*) of cold brew green teas

| Examples | % Moisture added | L* | a* | b* | Delta b* |
|---|---|---|---|---|---|
| 3 | 0 | 93.0 | -3.4 | 13.1 | |
| 5 | 43 | 93.1 | -3.4 | 12.9 | -0.2 |
| 6 | 53 | 92.8 | -3.5 | 13.6 | 0.5 |
| 7 | 62 | 92.3 | -4.3 | 16.7 | 3.6 |
| 8 | 73 | 92.0 | -4.6 | 18.5 | 5.7 |
| 9 | 76 | 91.7 | -4.7 | 19.2 | 6.1 |
| 10 | 81 | 91.7 | -4.7 | 19.3 | 6.3 |

From data in Table 5, it can be seen that the most significant improvements in b* value were obtained when the water was added to achieve a moisture content of 62% or above, and most particularly 73% or above.

Effect of incubation time

*Example 11*

The tea leaf product of Example 3 (100 g) was hydrated with 240 mL of deionized water to achieve a moisture content of 73% and incubated at room temperature (25 °C) for 30 minutes, before being dried to a moisture content of 2-3% in fluidized bed dryer at 120 °C for about 20 minutes.

*Example 12*

The tea leaf product of Example 3 (100 g) was hydrated with 240 mL of deionized water to achieve a moisture content of 73% and incubated at room temperature (25 °C) for 60 minutes, before being dried to a moisture content of 2-3% in fluidized bed dryer at 120 °C for about 20 minutes.

*Example 13*

The tea leaf product of Example 3 (100 g) was hydrated with 240 mL of deionized water to achieve a moisture content of 73% and incubated at room temperature (25 °C) for 90 minutes, before being dried to a moisture content of 2-3% in fluidized bed dryer at 120 °C for about 20 minutes.

*Example 14*

The tea leaf product of Example 3 (100 g) was hydrated with 240 mL of deionized water to achieve a moisture content of 73% and incubated at room temperature (25 °C) for 120 minutes, before being dried to a moisture content of 2-3% in fluidized bed dryer at 120 °C for about 20 minutes.

Cold brew infusions of the tea products of Examples 3, and 11 to 14 were then prepared according to Cold Brew procedure outlined above.

**Table 6**: Effect of incubation time on infusion colour (L*a*b*) of cold brew green teas

| Details | Incubation Time | L* | a* | b* | Delta b* |
|---|---|---|---|---|---|
| Example 3 | - | 93.8 | -3.7 | 14.0 | - |
| Example 11 | 30 min | 93.1 | -4.7 | 18.5 | 4.5 |
| Example 12 | 60 min | 92.8 | -4.8 | 19.8 | 5.8 |
| Example 13 | 90 min | 92.5 | -4.6 | 19.8 | 5.8 |
| Example 14 | 120 min | 92.9 | -4.6 | 19.9 | 5.9 |

From data in Table 6, it can be seen that the most significant improvements in b* value were obtained when the incubation time is 1 hr or greater at a fixed moisture content of 73%.

Effect of the temperature of water and incubation temperature

*Example 14A*

Fresh tea leaves were harvested from a Kenyan tea garden. The moisture content of the tea product was around 78%. The fresh tea leaves were then steamed at a temperature of 130 °C for about 1 minute. After the tea leaves were subjected to CTC (cut tear curl) for 4 times to obtain macerated dhool. The resulting dhool was then dried using fluidised bed drier at 120 °C for about 20 minutes or until the moisture content of the macerated leaves was to 2-3% moisture.

*Example 15*

The tea leaf product of Example 14 (100 g) was hydrated with 240 mL of deionized water at a temperature of 10 °C to achieve a moisture content of 73% and then incubated at room temperature (25 °C) for 1 hour, before being dried to a moisture content of 3% in fluidized bed dryer at 120 °C for about 20 minutes.

*Example 16*

The tea leaf product of Example 14 (100 g) was hydrated with 240 mL of deionized water at a temperature of 24 °C to achieve a moisture content of 73% and then incubated at room temperature (25 °C) for 1 hour, before being dried to a moisture content of 3% in fluidized bed dryer at 120 °C for about 20 minutes.

*Example 17*

The tea leaf product of Example 14 (100 g) was hydrated with 240 mL of deionized water at a temperature of 75 °C to achieve a moisture content of 73% and then incubated at room temperature (25 °C) for 1 hour, before being dried to a moisture content of 3% in fluidized bed dryer at 120 °C for about 20 minutes.

*Example 18*

The tea leaf product of Example 14 (100 g) was hydrated with 240 mL of deionized water at a temperature of 24 °C to achieve a moisture content of 73% and then incubated at Cold temperature (7 °C) for 1 hour, before being dried to a moisture content of 3% in fluidized bed dryer at 120 °C for about 20 minutes.

*Example 19*

The tea leaf product of Example 14 (100 g) was hydrated with 240 mL of deionized water at a temperature of 24 °C to achieve a moisture content of 73% and then incubated at room temperature (24 °C) for 1 hour, before being dried to a moisture content of 3% in fluidized bed dryer at 120 °C for about 20 minutes.

*Example 20*

The tea leaf product of Example 14 (100 g) was hydrated with 240 mL of deionized water at a temperature of 24 °C to achieve a moisture content of 73% and then incubated at Higher temperature (75 °C) for 1 hour, before being dried to a moisture content of 3% in fluidized bed dryer at 120 °C for about 20 minutes.

Cold brew infusions of the tea products of Examples 14A to 20 were then prepared according to Cold Brew procedure outlined above.

**Table 7:** Effect of temperature of water used for hydration of green teas on catechins delivery to cold brew.

| Examples | Temperature of Water used for wetting of green teas (°C) | Total Catechins Delivered Cold brew -mg/cup |
|---|---|---|
| Example 14A | | 9.8 |
| Example 15 | 10 | 17.7 |
| **Example 16** | **24** | **24.5** |
| Example 17 | 75 | 14.5 |

**Table 8:** Effect of temperature of incubation of green teas on catechins delivery to cold brew

| Examples | Temperature of Incubation (°C) | Total Catechins Delivered Cold brew -mg/cup |
|---|---|---|
| Example 14A | | 9.8 |
| Example 18 | 7 | 18.0 |
| **Example 19** | **24** | **24.5** |
| Example 20 | 75 | 18.8 |

From the Tables 7 and 8, it can be seen that the most significant improvements in catechin delivery were achieved when the water added to the tea was at ambient temperature (e.g. 24 °C) and also the step of incubation was conducted at ambient temperature (e.g. 24 °C).

Effect of Steaming

*Example 21*

Fresh tea leaves were harvested from a Kenyan tea garden. The moisture content of the tea product was around 78%. The fresh tea leaves were then steamed at a temperature of 130 °C for about 1 minute. Surface moisture was then removed by partial withering for up to 6 hours at a temperature of 25°C. Post surface moisture removal, the tea leaves were subjected to CTC (cut tear curl) for 4 times to obtain macerated dhool. The resulting dhool was then dried using fluidised bed drier at 120 °C for about 20 minutes or until the moisture content of the macerated leaves was to 2-3% moisture.

*Example 22*

The tea leaf product of Example 21 (100 g) was hydrated with 240 mL of deionized water at a temperature of 24 °C to achieve a moisture content of 73% and then incubated at room temperature (24 °C) for 1 hour, before being dried to a moisture content of 3% in fluidized bed dryer at 120 °C for about 20 minutes.

*Example 23*

The tea leaf product of Example 21 (100 g) was hydrated with 240 mL of deionized water at a temperature of 24 °C to achieve a moisture content of 73% and then incubated at room temperature (24 °C) for 1 hour. Post hydration, the tea leaves were subjected to steaming at a temperature of 130 °C for 10 minutes, before being dried to a moisture content of 3% in fluidized bed dryer at 120 °C for about 20 minutes.

Cold brew infusions were then prepared as described hereinabove.

**Table 9** - Effect of streaming of green teas on catechins delivery to cold brew

| Examples | Total Catechins delivered to Cold Brew(mg/cup) |
|---|---|
| Example 21 | 10.0 |
| Example 22 | 31.6 |
| Example 23 | 30.2 |

Though the steaming is not necessary as per the present invention, steaming is a common step in cold brew tea manufacturing process to keep the product safe from microbial growth. As shown in Table 9 above, an additional step of steaming after incubation and before drying may be used in the present process without any detriment to the delivery of catechins to the end cup.

Effect of Mechanical Shear on catechins delivery for Hot Brew application

*Example 24*

The tea leaf product of Example 14 (100 g) was hydrated with 240 mL of deionized water at a temperature of 24 °C to achieve a moisture content of 73% and then incubated at room temperature (25 °C) for 1 hour. The tea leaves were then passed through a Vincent CP4 Screw press (dead end pressure as 0 bar and rpm of rotation as 25 Hz) to provide mechanical shear to the wet tea leaves, before being dried to a moisture content of 3% in fluidized bed dryer at 120 °C for about 20 minutes.

2 g of the tea product outlined above was then packed in a double chamber teabag and dunked 10 times (approximately 1 dunk/sec) in 200 mL of deionised water at a temperature of 95 °C. Post brewing, the teabag was taken out and infusion was used for catechins measurement.

**Table 10:** Impact of Mechanical shear on catechins delivery in hot brew

| Example | Total Catechins mg/cup | % Increase over Example 3 |
|---|---|---|
| Example 3 | 37.9 | |
| **Example 16** | **44.0** | **16** |
| **Example 24** | **50.1** | **32** |

Delivery of Soluble Solids

*Experiment 25*

Fresh tea leaves were harvested from a Kenyan tea garden. The moisture content of the tea product was around 78%. The fresh tea leaves were then steamed at a temperature of 130 °C for about 1 minute. After the tea leaves were subjected to CTC (cut tear curl) for 4 times to obtain macerated dhool. The resulting dhool was then dried using fluidised bed drier at 120 °C for for about 20 minutes or until the moisture content of the macerated leaves was to 2-3% moisture.

*Experiment 26*

The tea leaf product of Example 25 (100 g) was hydrated with 240 mL of deionized water at a temperature of 24 °C to achieve a moisture content of 73% and then incubated at room temperature (24 °C) for 1 hour. Post hydration, the tea leaves were subjected to steaming at a temperature of 130 °C for 10 minutes, before being dried to a moisture content of 3% in fluidized bed dryer at 120 °C for about 20 minutes.

Cold brew infusions of the tea products of Examples 25 and 26 were then prepared according to Cold Brew procedure outlined above.

**Table 11** - Results from the delivery of soluble solids studies above.

| | L* | a* | b* | Total Catechins (mg/cup) | Delivered Solids (mg/cup) |
|---|---|---|---|---|---|
| Experiment 25 | 95.9 | -1.3 | 4.8 | 10.0 | 99 |
| **Experiment 26** | **94.6** | **-3.9** | **13.3** | **31.6** | **213** |

Samples produced by using primary processing by Experiment 25 does not infusion in ambient water, potentially due to green tea particles hydrophobicity. Inventors hypothesize that hydration of dried made green tea solubilizes the free sugars/amino acids that are present in the matrix during hydration and subsequently undergo Strecker/Maillard reactions enhancing the hydrophilicity of the tea matrix, which might be aiding to partition catechins/soluble solids into the ambient brew more efficiently.

Other plant materials

*Example 27*

100 g of ground ginger (obtained from Martin Bauer Germany, Size <2 mm, MB Batch No: 18316/180) was hydrated with 175 mL of deionized water to achieve a moisture content of 65% and incubated at room temperature (25 °C) for 1 hour, before being dried to a moisture content of 2-3% in fluidized bed dryer at 120 °C for about 20 minutes.

*Example 28*

100 g of ground turmeric root (obtained from Martin Bauer Germany, Size <2mm, MB Batch No: 18316/160) was hydrated with 175 mL of deionized water to achieve a moisture content of 65% and incubated at room temperature (25 °C) for 1 hour, before being dried to a moisture content of 2-3% in fluidized bed dryer at 120 °C for about 20 minutes.

*Example 29*

100g of ground valerian (obtained from Martin Bauer Germany, MB Batch No: 18316/220) was hydrated with 175 mL of deionized water to achieve a moisture content of 65% and incubated at room temperature (25 °C) for 1 hour, before being dried to a moisture content of 2-3% in fluidized bed dryer at 120 °C.

***Delivered Soluble solid estimation for herbal samples***

1 g of dried herbal sample (Size <1.4 mm- >0.71 mm) was taken in a 200 mL ceramic brewing vessel and 150 mL of freshly boiled deionised water (98 °C) was added and covered with a lid. The sample was brewed for 5 minutes statically with no stirring. At the end of 5 minutes, the infused liquor was strained using tea strainer with 150 $\mu$m size. 100 mL of the filtered hot liquid sample was poured on to a pre-weighed aluminium pan (200 mL) and dried on a water bath which was set at 100 °C. After complete evaporation, the pan was kept in a hot air over at 105 °C for 16 hours and then the dry solid weight was calculated by subtracting the empty pan weight.

$$\text{Delivered soluble solids} = \text{Dry solid weight} / \text{Dry weight of herb taken for brewing} * 100$$

Table 12 - Delivered solids content (mg/cup) of hot brew herb products.

| Example | Delivered Solid%-DS% | | % Increase |
|---|---|---|---|
| | Std Control | Inventive Examples | |
| 27 | 57 | 63 | 11 |
| 28 | 30 | 40 | 33 |
| 29 | 20 | 23 | 14 |

**Claims**

1. A process for producing a botanical product comprising the steps of:

a) providing a botanical material with a moisture content of less than 20% by weight;
b) contacting the botanical material with water to achieve a moisture content of between 30% and 100% by weight;
c) incubating the botanical material of step b) for at least 20 minutes; and

d) drying the botanical material to a moisture content of less than 10 % by weight.

2. A process as claimed in claim 1, wherein the botanical material is a tea leaf material, and preferably a green tea leaf material.

3. A process as claimed in claim 1, wherein the botanical material is a herbal material, preferably selected from rooibos, hibiscus, chamomile, rosehip, mint, lemon verbena product, chicory, an orange, yerba mate, ginger, turmeric, valerian, ashwagandha, echinacea flower, lavender flower, fennel seeds, elderberry, passion flower and combinations thereof.

4. A process as claimed in any one of claims 1 to 3, wherein the step of incubating the botanical material is conducted at a temperature of between 10 °C and 70 °C, and preferably at a temperature of between 20 °C and 50 °C.

5. A process as claimed in any one of claims 1 to 4, wherein the step of incubating the botanical material is conducted for between 30 minutes and 4 hours, and preferably between 1 hour and 3 hours.

6. A process as claimed in any one of claims 1 to 5, wherein in step b) the botanical material is contacted with water to achieve a moisture content of between 50% and 90% by weight, and preferably a moisture content of between 65% and 90% by weight.

7. A process as claimed in any one of claims 1 to 6, wherein after step c) and before step d) the botanical material is contacted with steam for between 1 minute and 30 minutes.

8. A process as claimed in claim 7, wherein the botanical material is contacted with steam at a temperature of between 95 °C and 140 °C for between 1 minute and 30 minutes.

9. A process as claimed in any one of claims 1 to 8, wherein after step c) and before step d) the botanical material is subjected to a step of mechanical shear.

10. A botanical material prepared according to the process as claimed in any one of claims 1 to 9.

Europäisches
Patentamt

European
Patent Office

Office européen
des brevets

# EUROPEAN SEARCH REPORT

**Application Number**

EP 23 20 1446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2020 0043782 A (PARK JIN SUK [KR]) 28 April 2020 (2020-04-28) * claims 1-5 * | 1-10 | INV. A23F3/06 A23F3/14 A23F3/34 A23L33/105 |
| X | US 2008/118602 A1 (NARAYANAN VENKATRAJ VENKATRAO [IN] ET AL) 22 May 2008 (2008-05-22) * comparative example A; examples 1,2; tables 1,2 * | 1-10 | |
| X | GB 1 546 508 A (UNILEVER LTD) 23 May 1979 (1979-05-23) * claim 1; example 1 * | 1-10 | |
| X | EP 4 111 868 A1 (EKATERRA RES AND DEVELOPMENT UK LIMITED [GB]) 4 January 2023 (2023-01-04) * claims 1-10; example 1 * | 1-4,7,8, 10 | |

**TECHNICAL FIELDS SEARCHED (IPC)**

A23F
A23L

The present search report has been drawn up for all claims

| Place of search | Date of completion of the search | Examiner |
|---|---|---|
| The Hague | 21 February 2024 | van Klompenburg, Wim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

# ANNEX TO THE EUROPEAN SEARCH REPORT
## ON EUROPEAN PATENT APPLICATION NO.

EP 23 20 1446

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2024

| Patent document cited in search report | | | Publication date | Patent family member(s) | | | Publication date |
|---|---|---|---|---|---|---|---|
| KR | 20200043782 | A | 28-04-2020 | NONE | | | |
| US | 2008118602 | A1 | 22-05-2008 | AT | E386442 | T1 | 15-03-2008 |
| | | | | AU | 2004313303 | A1 | 28-07-2005 |
| | | | | CA | 2552884 | A1 | 28-07-2005 |
| | | | | DE | 602004011991 | T2 | 19-02-2009 |
| | | | | EP | 1703800 | A1 | 27-09-2006 |
| | | | | JP | 4486094 | B2 | 23-06-2010 |
| | | | | JP | 2007517510 | A | 05-07-2007 |
| | | | | PL | 1703800 | T3 | 31-07-2008 |
| | | | | US | 2008118602 | A1 | 22-05-2008 |
| | | | | WO | 2005067727 | A1 | 28-07-2005 |
| GB | 1546508 | A | 23-05-1979 | AU | 501876 | B2 | 05-07-1979 |
| | | | | CA | 1087446 | A | 14-10-1980 |
| | | | | CH | 622410 | A5 | 15-04-1981 |
| | | | | DE | 2610533 | A1 | 07-10-1976 |
| | | | | GB | 1546508 | A | 23-05-1979 |
| | | | | IN | 144499 | B | 13-05-1978 |
| | | | | JP | S51115999 | A | 13-10-1976 |
| EP | 4111868 | A1 | 04-01-2023 | AR | 126256 | A1 | 04-10-2023 |
| | | | | EP | 4111868 | A1 | 04-01-2023 |
| | | | | WO | 2023275057 | A1 | 05-01-2023 |

EPO FORM P0459

For more details about this annex : see Official Journal of the European Patent Office, No. 12/82